# NOUVEAU FASCICULE DE BREVET EUROPEEN

(11) **EP 0 200 664 B2**
(45) Date de publication et mention de la décision concernant l'opposition: **03.04.1996**
(45) Mention de la délivrance du brevet: 20.12.1989
(21) Numéro de dépôt: 86440026.2
(22) Date de dépôt: 08.04.1986
(51) Int. Cl.: A01B 49/02, A01B 29/04

(54) **Machine agricole combinée comportant une machine de travail du sol et un rouleau**
Kombinierte Landmaschine bestehend aus einer Bodenbearbeitungsmaschine und einer Walze
Combined agricultural machine provided with a soil-working machine and a roller

(30) Priorité: 15.04.1985 FR 8505752
(43) Date de publication de la demande: 10.12.1986
(73) Titulaire: KUHN S.A., F-67700 Saverne (FR)
(72) Inventeur: Oberle, Edmond, Haegen F-67700 Saverne (FR); Klein, Jean, Dossenheim-sur-Zinsel F-67330 Bouxwiller (FR)

(56) Documents cités:
- EP-A- 0 093 193
- DE-A- 2 749 656
- DE-U- 8 414 544
- FR-A- 2 369 783
- FR-A- 2 559 339
- US-A- 1 545 564
- Le catalogue "Pièces de Rechange Herses Rotative" , Kuhn No. 901418010 daté 9.83
- Le prospectus "Herses Rotatives", Kuhn réf. 9017136 daté 3.85
- Prospectus Rau Rototiller
- Prospectus Kuhn Kreiseleggen HR4000
- Prospectus cultivateur rotatif Amazone
- Rau Ersatzteilliste
- Rau Betriebsanleitung

## Description

La présente invention concerne une machine agricole combinée de travail du sol telle que décrite dans le préambule de la revendication 1.

On connaît une telle machine combinée de travail du sol (catalogue Pièces de Rechange Herse Rotative KUHN No. 901 418 010 daté 9.83 et prospectus Herses Rotatives KUHN réf. 9 017 136 daté 3.85) qui est formée par une herse rotative et par un rouleau. Ce rouleau est lié au caisson de la herse rotative au moyen d'un bras prévu à chaque extrémité dudit rouleau. Le rouleau est guidé en rotation à l'extrémité arrière de chaque bras. A leur extrémité avant, les bras sont chacun lié au caisson de la herse rotative au moyen d'un tourillon définissant un axe de pivotement qui s'étend transversalement à la direction de travail. Entre la partie médiane de chaque bras et le caisson de la herse rotative est prévu un dispositif de réglage de la profondeur de travail des outils de la herse rotative. Ce réglage s'effectue en faisant pivoter l'ensemble rouleau-bras autour des tourillons qui lent l'extrémité avant des bras au caisson de la herse rotative. Sur les bras du rouleau est également fixée une structure porteuse de section carrée, qui supporte des organes de raclage destinés au nettoyage du rouleau. Ce rouleau comporte une enveloppe cylindrique et des couronnes agencées en saillie par rapport à ladite enveloppe et espacées le long dudit rouleau. Chaque organe de raclage comprend un bras fixé à son extrémité supérieure à la structure porteuse, et une partie racleuse agencée à l'extrémité inférieure dudit bras, qui s'étend entre deux couronnes voisines jusqu'au niveau de l'enveloppe du rouleau. Pour éviter que la structure porteuse ne se déforme sous l'effort important engendré par le nettoyage du rouleau, ce qui diminuerait la qualité du nettoyage, il est prévu un mécanisme de rigidification de la structure porteuse. Ce mécanisme de rigidification comporte deux organes de rigidification identiques. Chaque organe de rigidification comporte un bras support qui est lié à son extrémité avant à la herse rotative au moyen d'une douille excentrée et à son extrémité arrière à l'extrémité supérieure d'une patte de la structure porteuse. En vue latérale, la liaison articulée des bras du rouleau au caisson de la herse rotative, la liaison articulée du bras support de l'organe de rigidification à l'extrémité supérieure de la patte de la structure porteuse et la liaison par douille excentrée dudit bras support à la herse rotative forment un quadrilatère déformable dont la déformation est théoriquement bloquée pendant le travail par un boulon qui bloque la rotation de la douille excentrée, et par un tirant prévu entre le bras support et la patte correspondante de la structure porteuse. La fonction de ce tirant est de maintenir l'angle entre le bras support et la patte correspondante. Cette machine agricole combinée de travail du sol présente deux inconvénients. Un premier inconvénient réside dans la difficulté du réglage de la position du rouleau par rapport à la herse rotative. En effet, à chaque fois que l'utilisateur veut modifier la position du rouleau, il est tout d'abord obligé de desserrer, d'une part, le boulon serrant la douille excentrée de chaque organe de rigidification et, d'autre part, le tirant de chaque organe de rigidification, puis, une fois la position du rouleau réglée, de resserrer les boulons serrant les douilles excentrées correspondantes et de régler correctement la longueur des tirants afin que les organes de raclage agencés dans la partie médiane du rouleau soient correctement positionnés par rapport au rouleau. Ceci occasionne une perte de temps à l'utilisateur. En sus, il y a un risque qu'il règle mal la longueur des tirants. Ceci entraînera alors soit un mauvais nettoyage dans la partie médiane du rouleau si le réglage est insuffisant, soit, en cas de réglage excessif, un freinage du rouleau occasionnant une demande de puissance de traction plus importante et une usure prématurée du rouleau. Un deuxième inconvénient de cette machine combinée de travail du sol connue réside, dans certaines conditions de travail, dans le manque de rigidification de la structure porteuse dans une direction opposée à la direction de travail. Ceci résulte du fait que la douille excentrée, bien que serrée par le boulon correspondant, arrive à tourner sous l'action de l'effort et des vibrations. De cette sorte, l'axe de la partie extérieure de la douille excentrée, l'axe de l'alésage de cette douille et l'axe de l'articulation liant le bras support correspondant à la patte correspondante de la structure porteuse ont tendance à s'aligner, ce qui permet à ladite structure porteuse de fléchir vers l'arrière. Les organes de raclage prévus dans la partie médiane du rouleau se décollent alors de l'enveloppe du rouleau et deviennent incapables de nettoyer ce dernier.

Il existe par ailleurs une machine agricole combinée de travail du sol dans laquelle la machine de travail du sol peut se déplacer au travail vers le haut par rapport au rouleau (prospectus AMAZONE HERSE ALTERNATIVE + ROULEAU PACKER réf. RE 107 (F) daté 8.74). Ceci permet à ladite machine de travail du sol de passer par dessus d'éventuels obstacles qui se trouvent dans le sol sans que le rouleau ne quitte le sol. On évite ainsi une détérioration des organes de ladite machine de travail du sol.

Le but de la présente invention est, en premier lieu, de remédier aux inconvénients de la machine agricole combinée de travail du sol existante et puis de pouvoir adapter un mécanisme de rigidification du dispositif de décrottage du rouleau sur une machine agricole combinée de travail du sol dans laquelle la machine de travail du sol peut se déplacer par rapport au rouleau.

A cet effet, la machine agricole combinée de travail du sol selon la présente invention est caractérisée par le fait que l'organe de rigidification est lié à la machine de travail du sol au moyen d'un tourillon présentant un deuxième axe au moins sensiblement confondu avec le premier l'axe autour duquel peuvent pivoter le rouleau et le dispositif de décrottage par rapport à la machine de travail du sol et que ledit organe de rigidification peut pivoter librement autour dudit deuxième axe.

Avec cet agencement, le réglage de la position du rouleau muni d'un dispositif de décrottage et d'un mécanisme de rigidification de la structure porteuse de ce dispositif de décrottage a pu être substantiellement simplifié. En effet, étant donné que l'organe de rigidification, peut tourner librement au moins sensiblement autour du même axe que le rouleau et le dispositif de décrottage, l'utilisateur n'a plus à intervenir sur ledit organe. Il n'y a donc plus de pertes de temps, ni de risques de mauvais réglage de l'organe de rigidification. La rigidification de la structure porteuse dans une direction opposée à la direction de travail a ensuite été substantiellement augmentée. Ceci résulte en effet du fait que le quadrilatère formé dans la machine de l'art antérieur par les liaisons respectives de l'organe de rigidification, d'une part, à la machine de travail du sol par douille excentrée et, d'autre part, à la structure porteuse, et du rouleau à la machine de travail du sol, a été supprimé. Avec cet agencement, il est enfin possible de monter un mécanisme de rigidification de la structure porteuse du dispositif de décrottage du rouleau d'une machine agricole combinée dans laquelle la machine de travail du sol peut, pendant le travail, se déplacer vers le haut par rapport audit rouleau.

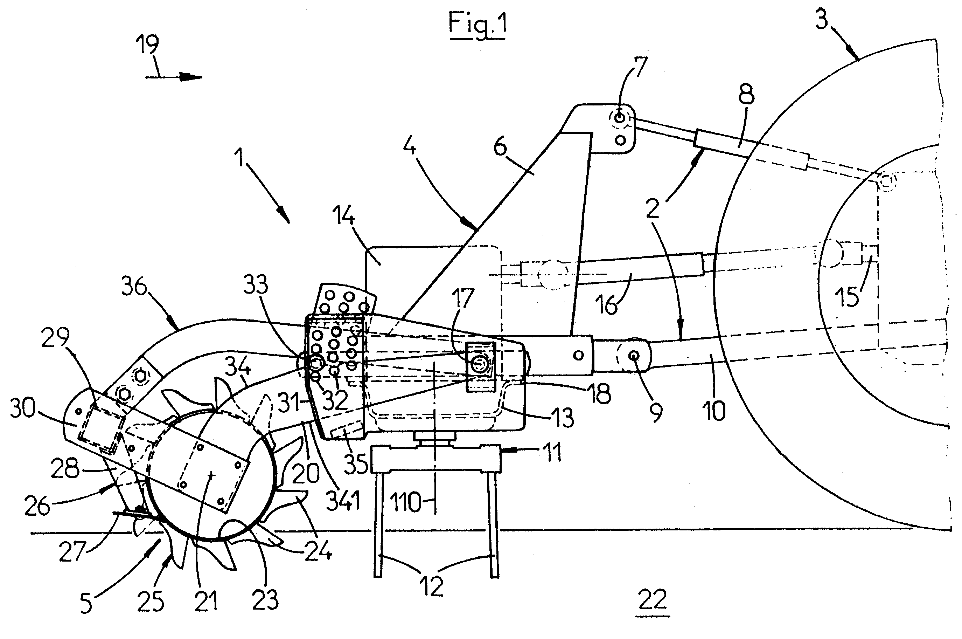

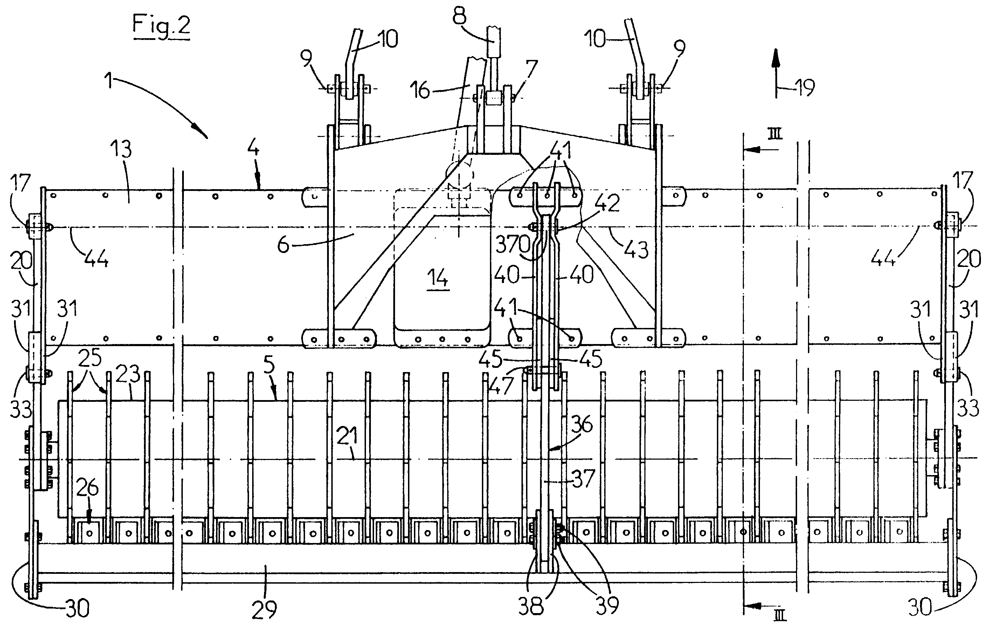

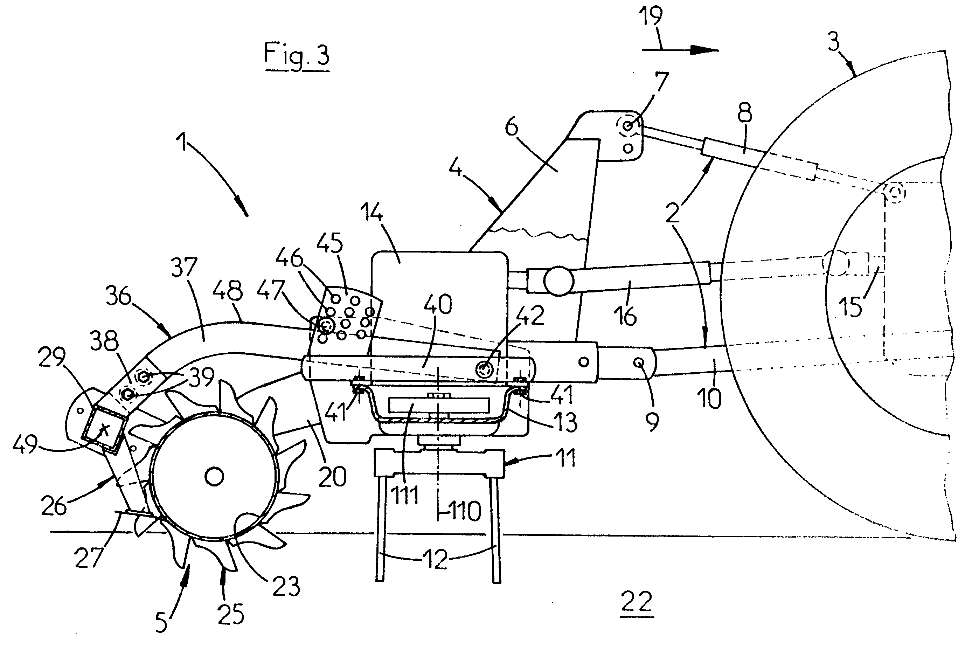

Dans la FR-A 2 369 783, il est décrit (figures 1 et 2) une machine combinée de travail du sol composée par une machine de travail du sol et par deux rouleaux. La machine de travail du sol comporte un châssis creux dans lequel sont guidés et entraînés en rotation des organes de travail rotatif. A ses extrémités, le châssis creux est muni de plaques en forme de secteurs, dont le côté le plus large est situé à l'arrière et comporte un certain nombre de trous. L'avant des plaques est pourvu d'axes autour desquels peuvent tourner des bras dirigés vers l'arrière. En regard des trous aménagés dans la plaque correspondante, chaque bras est muni d'un trou dans lequel, ainsi que dans l'un des trous aménagés dans ladite plaque, peut être introduit un boulon. A chacun des bras est fixé un organe porteur qui est dirigé pratiquement dans le prolongement d'un bras. Ces organes porteurs sont munis chacun d'un support dirigé vers le bas. Entre ces supports est monté un rouleau directement situé derrière les organes de travail avec possibilité de rotation libre sur lui-même. Ce rouleau est un rouleau compresseur. A cet effet, ce rouleau comporte un arbre qui est dirigé perpendiculairement au sens de l'avancement A. Sur cet arbre sont montés côte à côte des disques qui peuvent tourner librement. Auxdits organes porteurs est fixé, derrière le rouleau, un tube dirigé parallèlement au châssis et qui est muni, à ses extrémités, de bras dirigés obliquement vers le bas. Entre ces bras est disposé un second rouleau muni à sa surface périphérique d'éléments longitudinaux hélicoïdaux en forme de bandes qui présentent une dentelure dirigée vers l'extérieur. Près de l'avant, le châssis est muni d'un chevalet par l'intermédiaire duquel la machine peut être accouplée au dispositif de levage à trois points d'un tracteur. Près de son milieu, ledit tube est muni d'oreilles qui sont articulées, à l'aide d'axes, à une fourche d'une tige qui est liée à la partie supérieure du chevalet par un raccord fileté. Grâce à ce dispositif, il est possible de régler la position des rouleaux par rapport au châssis de la machine de travail du sol. Pour ce faire, il faudra extraire les boulons des trous aménagés dans les plaques du châssis, puis tourner dans l'un ou dans l'autre sens le raccord fileté jusqu'à ce que le trou aménagé dans chaque bras du rouleau coïncide avec un autre trou aménagé dans la plaque correspondante, et enfin de réintroduire ledit boulon. Lors dudit réglage, la tige prévue à cet effet, exerce l'effort au milieu du tube auquel elle est liée. Or, compte tenu du fait qu'il y a deux rouleaux, cet effort est relativement important. Pour éviter que dans ce cas le tube ne fléchisse vers l'avant, ledit tube est muni, près de son milieu, d'un bras dirigé vers l'avant et lié à son extrémité avant sur le châssis par une articulation alignée sur les axes d'articulation des bras du rouleau. Au travail, ce bras n'a aucune fonction. En sus, la machine décrite dans les figures 1 et 2 de cette publication ne comporte pas de dispositif de décrottage des rouleaux. Dans les figures 3 à 5 de cette publication est décrite une variante de réalisation. Dans cette variante, le premier rouleau est fait de pièces discoïdales, en plaque de tôle, écartées les unes des autres, qui sont montées par l'intermédiaire d'un moyeu sur l'arbre. A leur circonférence périphérique, les pièces discoïdales ont pratiquement, en section, la forme d'un V renversé. Le rouleau est en sus muni d'une barre racleuse qui s'étend très près de la périphérie extérieure des pièces discoïdales et qui est supportée par une structure support. Dans la partie médiane, la barre racleuse est liée à la fourche de la tige servant au réglage de la position des rouleaux par rapport à la machine de travail du sol.

Ce dispositif de décrottage est très différent de celui équipant la machine combinée de notre présente invention. En sus, il ne comporte pas de mécanisme de rigidification.

Selon une caractéristique supplémentaire de l'invention, il est possible d'agencer en sus un organe de limitation qui limite vers le haut le pivotement de l'organe de rigidification autour de son axe de pivotement, et qu'en travail normal, l'organe de limitation agit sur le mécanisme de rigidification. Avec cet agencement, il est possible d'obtenir en plus une limitation de la flexion de la structure porteuse vers le haut. Ceci permet d'augmenter la durée de vie du rouleau et des organes de raclage.

Selon une autre caractéristique supplémentaire, le dispositif de fixation de l'organe de rigidification sur la structure porteuse est muni d'un moyen de rattrapage des tolérances de fabrication. On s'assure ainsi que la structure porteuse des organes de raclage ne soit pratiquement pas ou pas du tout déformée lors du montage de l'organe de rigidification sur la machine. Les organes de raclage pourront ainsi mieux remplir leur fonction de décrottage du rouleau.

D'autres caractéristiques de l'invention sont contenues dans les autres sous-revendications et dans la description ci-dessous d'un exemple de réalisation non limitatif de l'invention faite en référence au dessin annexé, sur lequel:
- La figure 1 représente une vue latérale d'une machine agricole combinée de travail du sol selon l'invention,
- La figure 2 représente une vue de dessus de la machine agricole combinée de travail du sol de la figure 1,
- La figure 3 représente une vue latérale de la machine agricole combinée de travail du sol des figures 1 et 2, coupée suivant le plan III,
- La figure 4 représente une vue latérale de l'extrémité arrière de l'organe de rigidification du dispositif de décrottage du rouleau de la machine agricole combinée des figures 1 - 3, et
- La figure 5 représente une vue en coupe partielle suivant le plan V de l'extrémité arrière de l'organe de rigidification de la figure 4.

Sur la figure 1, on voit que la machine agricole combinée (1) est attelée à l'attelage arrière à trois points (2) d'un tracteur agricole (3). La machine (1) est composée par une machine de travail du sol (4) combinée avec un rouleau (5). La machine de travail du sol (4) est munie d'un chevalet (6) qui comporte trois points d'attelage, un point supérieur (7) permettant la liaison avec la bielle supérieure (8) de l'attelage (2) et deux points inférieurs (9) permettant la liaison avec les deux bielles inférieures (10) de l'attelage (2).

Dans l'exemple décrit, la machine de travail du sol (4) est, sans que cela ne soit limitatif, une herse rotative qui comporte une rangée de rotors (11) munis d'outils (12) dirigés vers le bas. Les rotors (11) s'étendent sous une poutre(13) sur laquelle est fixé le chevalet (6). Les rotors (11) sont guidés en rotation dans la poutre (13) autour d'axes (110) sensiblement parallèles et s'étendant vers le haut. Lesdits rotors (11) sont entraînés en rotation de manière contrarotative, par un dispositif d'entraînement (111) tel qu'une cascade de roues dentées par exemple, logé dans la poutre (13) et recevant le mouvement d'une boîte de vitesses (14), elle-même entraînée par l'arbre de prise de force (15) du tracteur (3) au moyen d'un arbre à joints universels (16).

A chaque extrémité latérale, la poutre (13) est munie d'un tourillon (17) qui est de préférence agencé vers le bord avant (18) de la poutre (13), compte tenu du sens de travail (19) de la machine agricole combinée (1). A chaque tourillon (17) est lié de manière articulée un tirant (20) qui s'étend vers l'arrière, sensiblement parallèlement à la direction de travail définie par la flèche (19).

Entre les extrémités arrière des tirants (20) s'étend le rouleau (5). A cet effet, chaque tirant (20) est muni d'un palier dans lequel est guidé en rotation le rouleau (5) de manière à pouvoir tourner autour de son axe longitudinal (21) qui s'étend transversalement et de préférence perpendiculairement à la direction de travail.

Dans l'exemple décrit, le rouleau (5) est entraîné par le sol (22). Il est cependant parfaitement possible dans le cadre de l'invention que le rouleau (5) de la machine (1) soit entraîné par un dispositif d'entraînement.

Le rouleau représenté est formé par une enveloppe (23) sensiblement cylindrique sur laquelle sont fixées des saillies (24) qui ont pour fonction d'entraîner le rouleau (5) en rotation et de provoquer un morcellement supplémentaire des mottes créées par la machine de travail du sol (4).

Ces saillies (24) sont disposées sur l'enveloppe (23) suivant des couronnes (25). A l'arrière, entre deux couronnes (25) de saillies (24) voisines s'étend un organe de raclage (26). Chaque organe de raclage (26) se compose d'une raclette (27) qui s'étend jusque près de l'enveloppe (23), et d'un bras (28) qui supporte à son extrémité inférieure la raclette (27) et qui est fixé à son extrémité supérieure sur une structure porteuse (29). La structure porteuse (29) comporte à chaque extrémité un bras porteur (30) à l'aide desquels la structure porteuse (29) est montée sur les tirants (20) qui lent le rouleau (5) à la machine de travail du sol (4). L'ensemble ainsi formé comportant la structure porteuse (29) avec ses bras porteurs (30), et les organes de raclage (26) constitue le dispositif de décrottage du rouleau (5).

Sur la figure 1, on voit encore qu'entre l'extrémité avant où les tirants (20) sont articulés à la poutre (13) et l'extrémité arrière où les tirants (20) sont liés au rouleau (5), lesdits tirants (20) passent chacun entre deux plaques (31). Les plaques (31) comportent un certain nombre de trous (32). Dans deux trous (32) correspondants est enfilée une broche (33) contre laquelle vient buter la face supérieure (34) du tirant (20) correspondant.

On voit donc que la machine de travail du sol (4) peut pivoter vers le bas par rapport au rouleau (5) jusqu'à ce que la face supérieure (34) des tirants (20) vienne en butée sur les broches (33). Lorsque les broches (33) sont enfilées dans deux autres trous (32) correspondants, la machine de travail du sol (4) peut prendre une autre position par rapport au rouleau (5). L'ensemble plaques (31) à trous (32), broches (33) et face supérieure (34) des tirants (20) permet ainsi de régler la profondeur de travail des outils (12) de la machine de travail du sol (4).

Cependant, comme le pivotement des tirants (20) vers le bas autour des tourillons (17) est possible, la machine de travail du sol (4) peut se soulever pendant le travail par rapport au rouleau (5) qui lui roule sur le sol (22). Ceci permet aux outils (12) de la machine (4) de passer aisément par-dessus des obstacles se trouvant dans le sol (22). On évite ainsi la détérioration des rotors (11) ou de leur dispositif d'entraînement (111).

Afin d'éviter que le rouleau (5) ne pivote trop vers le bas lorsque la machine combinée (1) est levée à l'aide de l'attelage (2), on a agencé une butée (35) entre les plaques (31) dans la partie basse de celles-ci, sur laquelle vient buter la face inférieure (341) des tirants (20).

Comme visible sur la figure 1, la machine combinée (1) est équipée d'un mécanisme de rigidification (36) de la structure porteuse (29) du dispositif de décrottage du rouleau (5). Ce mécanisme de rigidification est particulièrement utile lorsque la longueur du rouleau (5) est importante. En effet, dans ce cas, la flèche au milieu de la structure porteuse (29) peut être tellement importante que la partie médiane du rouleau (5) n'est plus correctement nettoyée par les raclettes (27).

Ce mécanisme de rigidification (36) sera maintenant décrit plus précisément à la lumière des figures suivantes.

Sur les figures 2 et 3, on voit que le mécanisme de rigidification (36) se compose d'un organe de rigidification (37) qui est dans l'exemple formé par un bras de rigidification s'étendant depuis la structure porteuse (29) vers l'avant et sensiblement parallèlement à la direction de travail. A son extrémité arrière, l'organe de rigidification (37) s'étend entre deux pattes (38) solidaires de la structure porteuse (29) et y est fixé au moyen de deux organes de fixation (39). A son extrémité avant, l'organe de rigidification (37) s'étend entre deux longerons (40) fixés à l'aide d'organes de fixation (41) sur le dessus de la poutre (13). L'extrémité avant de l'organe de rigidification (37) est liée aux longerons (40) entre lesquels elle s'étend, au moyen d'un tourillon (42) dont l'axe (43) est sensiblement confondu avec l'axe (44) des tourillons (17) autour duquel pivotent les tirants (20), le rouleau (5) et le dispositif de décrottage. A cet effet, l'extrémité avant de l'organe de rigidification (37) comporte un trou (370) qui forme palier, dans lequel est enfilé le tourillon (42).

A leur extrémité arrière, les longerons (40) comportent chacun une plaque (45) entre lesquelles passe l'organe de rigidification (37). Chaque plaque (45) comporte un certain nombre de trous (46). Dans deux trous (46) correspondants est enfilée une broche (47) contre laquelle vient buter la face supérieure (48) de l'organe de rigidification (37). Les trous (46) sont disposés dans les plaques (45) d'une manière analogue suivant laquelle les trous (32) sont disposés dans les plaques (31). Ainsi, lorsque les broches (33) ont été enfilées dans deux trous (32) des plaques (31) pour déterminer une position donnée du rouleau (5) par rapport à la machine (4), la broche (47) peut être enfilée dans deux trous (46) correspondants des plaques (45).

Comme dit plus haut, la machine (4) peut pivoter vers le bas par rapport au rouleau (5) jusqu'à ce que la face supérieure (34) des tirants (20) vienne en butée sur les broches (33). A cet instant, la face supérieure (48) de l'organe de rigidification (37) bute également sur la broche (47).

Ainsi qu'il a été dit plus haut également, le montage du rouleau (5) sur la machine (4) est tel que la machine (4) peut se soulever par rapport au rouleau (5) pour passer par-dessus des obstacles se trouvant dans le sol (22). Comme l'organe de rigidification (37) est monté articulé sur la machine (4) de manière à pouvoir pivoter autour d'un axe (43) qui est sensiblement confondu avec l'axe (44) autour duquel peut pivoter le rouleau (5), et comme le pivotement de l'organe de rigidification (37) est possible vers le bas dans une certaine limite, la machine (4) peut aussi se soulever par rapport au mécanisme de rigidification (36) sans que celui-ci ne puisse gêner ce soulèvement.

Comme dit plus haut, dans la position normale de fonctionnement, c'est-à-dire quand la face supérieure (34) des tirants (20) bute contre les broches (33), alors la face supérieure (48) de l'organe de rigidification (37) bute également contre la broche (47). Le mécanisme de rigidification (36) procure alors une triple rigidification de la structure porteuse (29). En effet, l'organe de rigidification (37) diminue tout d'abord substantiellement la torsion de la structure porteuse (29) autour de son axe longitudinal (49) et la flexion de celle-ci vers l'arrière sous l'effet des efforts exercés sur les organes de raclage (26) pendant le nettoyage du rouleau (5). En sus, comme la face supérieure (48) de l'organe de rigidification (37) bute également sur la broche (47), ledit organe (37) diminue également substantiellement la flexion de la structure porteuse (29) vers le haut sous l'effet des forces exercées sur les organes de raclage (26) pendant le nettoyage du rouleau (5). On évite ainsi que les raclettes (27) ne soient plaquées vers le haut contre l'enveloppe (23) du rouleau (5).

Comme à chaque position du rouleau (5) par rapport à la machine (4) correspondent deux trous (46) correspondants aménagés dans les plaques (45), on voit donc que la rigidification de la structure porteuse (29) vers le haut est assurée dans chaque position du rouleau (5).

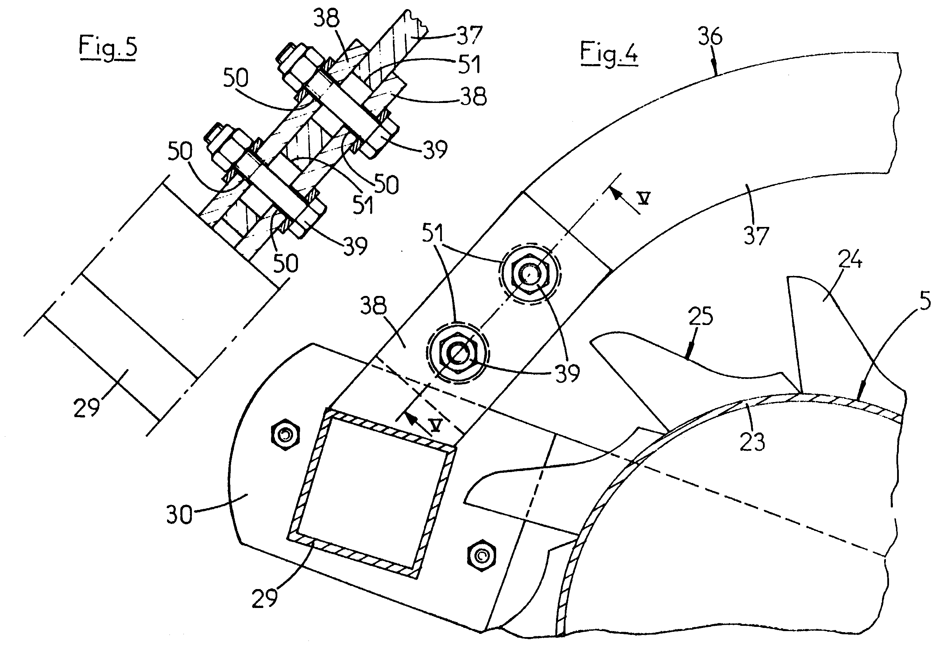

Sur les figures 4 et 5, on voit le montage de l'organe de rigidification (37) sur la structure porteuse (29). Comme dit plus haut, l'extrémité arrière de l'organe de rigidification (37) s'étend entre deux pattes (38) solidaires de la structure porteuse (29), et y est fixée au moyen de deux organes de fixation (39).

Comme il vient d'être décrit, le rouleau (5) est monté sur la machine (4) au moyen des deux tirants (20). La structure porteuse (29) est elle-même montée sur les tirants (20) au moyen de deux bras porteurs (30). Or la fabrication de ces différentes pièces de même que de l'organe de rigidification (37) demande une certaine plage de tolérance notamment en ce qui concerne les pièces obtenues par mécanosoudure. Toutefois, l'axe (42) autour duquel doit pouvoir pivoter l'organe de rigidification (37), doit sensiblement être confondu avec l'axe (44) défini par les tourillons (17). On voit alors qu'il pourrait y avoir des problèmes lorsque toutes les pièces étant montées, on veut fixer l'extrémité arrière de l'organe de rigidification (37) aux pattes (38). On pourrait en effet avoir des problèmes pour introduire les organes de fixation (39) au travers des trous (50) aménagés dans les pattes (38) et des trous (51) aménagés dans l'organe de rigidification (37). Pour supprimer ces problèmes, on voit que les trous (51) aménagés dans l'organe de rigidification (37) ont un diamètre beaucoup plus grand que le diamètre des organes de fixation (39). Il est donc ainsi possible d'introduire dans tous les cas les organes de fixation (39) au travers des trous (50) et des trous (51) sans introduire de déformations initiales dans la structure porteuse (29).

Dans l'exemple qui vient d'être décrit, la longueur de la structure porteuse (29) ne nécessitait qu'un seul organe de rigidification (37) pour être correctement rigidifiée. Dans le cadre de l'invention, il est cependant possible, si la longueur de la structure porteuse (29) le nécessite, d'agencer plusieurs organes de rigidification (37) écartés les uns des autres d'une certaine distance.

Diverses modifications et améliorations peuvent être apportées à l'exemple de réalisation décrit qui, rappelons-le, n'est pas limitatif sans qu'on sorte pour autant du cadre de la présente invention.

## Revendications

1. Machine agricole combinée de travail du sol (1) comportant une machine de travail du sol (4) composée d'une poutre (13) dans laquelle sont guidés en rotation des outils (12) et sur laquelle est fixé un chevalet (6) permettant la fixation de la machine agricole combinée de travail du sol (1) à l'attelage (2) d'un tracteur agricole (3), et un rouleau (5) susceptible de pivoter par rapport à ladite machine de travail du sol (4) autour d'un premier axe (44) dirigé transversalement à la direction de travail (19), ledit rouleau (5) étant lié à la machine de travail du sol (4) au moyen de deux tirants (20) entre lesquels s'étend le rouleau (5) et qui sont munis chacun d'un palier dans lequel est guidé en rotation le rouleau (5) de manière à pouvoir tourner autour de son axe longitudinal (21), lesdits tirants (20) qui s'étendent sensiblement parallèlement à la direction de travail (19), étant liés chacun à une extrémité correspondante de la poutre (13) au moyen d'un tourillon (17), lesquels tourillons (17) définissent le premier l'axe (44), ledit rouleau (5) comportant une enveloppe (23) au moins sensiblement cylindrique et des couronnes (25) agencées en saillie par rapport à ladite enveloppe (23) et espacées le long dudit rouleau (5), ledit rouleau (5) étant muni d'un dispositif de décrottage comportant une structure porteuse (29) liée à chaque extrémité au tirant (20) correspondant, et des organes de raclage (26) supportés par ladite structure porteuse (29), lesdits organes de raclage (26) comprenant chacun un bras (28) fixé à son extrémité supérieure sur la structure porteuse (29) et une partie racleuse (27) agencée à l'extrémité inférieure dudit bras (28), qui s'étend entre deux couronnes (25) voisines jusqu'au niveau de l'enveloppe (23), ledit dispositif de décrottage comportant par ailleurs un mécanisme de rigidification (36) de ladite structure porteuse (29) qui comporte au moins un organe de rigidification (37) lié à son extrémité avant à la machine de travail du sol (4) et à son extrémité arrière à la structure porteuse (29), caractérisée par le fait que ledit organe de rigidification est lié à la machine de travail du sol (4) au moyen d'un tourillon (42) présentant un deuxième axe (43) au moins sensiblement confondu avec le premier l'axe (44) autour duquel peuvent pivoter le rouleau (5) et le dispositif de décrottage par rapport à la machine de travail du sol (4) et que ledit organe de rigidification (37) peut pivoter librement autour dudit deuxième axe (43).

2. Machine agricole combinée de travail du sol selon la revendication 1, caractérisée par le fait qu'un organe de limitation (45, 46, 47) limite vers le haut le pivotement de l'organe de rigidification (37) autour de l'axe (43), et qu'en travail normal, l'organe de limitation (45, 46, 47) agit sur le mécanisme de rigidification (36).

3. Machine agricole combinée de travail du sol selon l'une au moins des revendications 1 ou 2, caractérisée par le fait que l'organe de rigidification (37) est, au travail, lié rigidement à la structure porteuse (29) à son extrémité arrière et comporte à son extrémité avant un palier (370) qui permet son pivotement autour deuxième axe (43) sensiblement confondu avec le premier axe (44) autour duquel peuvent pivoter le rouleau (5) et le dispositif de décrottage.

4. Machine agricole combinée de travail du sol selon la revendication 3, caractérisée par le fait que l'organe de rigidification (37) s'étend sensiblement dans la direction d'avance (19) de la machine (1) au travail.

5. Machine agricole combinée de travail du sol selon la revendication 2 et l'une au moins des revendications 3 ou 4, caractérisée par le fait que l'organe de limitation (45, 46, 47) s'étend entre le palier (370) situé à l'extrémité avant de l'organe de rigidification (37), et l'extrémité arrière de cet organe (37) où ce dernier est lié à la structure porteuse (29).

6. Machine agricole combinée de travail du sol selon la revendication 5, caractérisée par le fait que l'organe de limitation (45, 46, 47) est formé par deux plaques (45) dirigées vers le haut et munies d'un certain nombre de trous (46), entre lesquelles s'étend l'organe de rigidification (37), et d'une broche (47) enfilée dans deux trous (46) correspondants desdites plaques (45) et contre laquelle bute l'organe de rigidification (37) en travail normal.

7. Machine agricole combinée de travail du sol selon la revendication 6, caractérisée par le fait que la broche (47) collabore avec le bord supérieur (48) de l'organe de rigidification (37).

8. Machine agricole combinée de travail du sol selon l'une au moins des revendications 1 à 7, caractérisée par le fait que le dispositif de fixation de l'organe de rigidification (37) sur la structure porteuse (29) est muni d'un moyen de rattrapage des tolérances de fabrication.

9. Machine agricole combinée de travail du sol selon la revendication 8, caractérisée par le fait que le dispositif de fixation de l'organe de rigidification (37) sur la structure porteuse (29) comporte deux pattes (38) solidaires de la structure porteuse (29) munies de trous (50) pour le passage d'organes de fixation (39), pattes (38) entre lesquelles s'étend l'extrémité arrière de l'organe de rigidification (37) qui comporte également des trous (51) de passage des organes de fixation (39), et que le moyen de rattrapage des tolérances de fabrication est formé par la structure des trous (51) aménagés dans l'organe de rigidification (37) qui ont un diamètre substantiellement plus grand que le diamètre des organes de fixation (39).

## Claims

1. A combined agricultural machine (1) for working the soil, including a soil-working machine (4) constituted by a beam (13) in which tools (12) are guided in rotation et on which is fastened a trestle (5) allowing to hitch the combined agricultural machine (1) for working the soil to the hitching structure (2) of a agricultural tractor, and a roller (5) capable of pivoting with respect to the said soil-working machine (4) about a first axis (44) directed transversely to the working direction (19), the said roller (5) being connected to the soil-working machine (4) by means of two tie-rods (20) between which the roller (5) extends and each of which being provided with a bearing in which the roller (5) is guided in rotation so that it can turn about its longitudinal axis (21), the said tie-rods (20) which extend approximately parallelly to the direction of work (19), being each connected to a corresponding end of the beam (13) by means of a pin (17), the said pins (17) defining the first axis (44), the said roller (5) including a at least substantially cylindrical envelope (23) and crowns (25) fitted to project with respect to the said envelope (23) and spaced along the said roller (5), the said roller (5) being equipped with a scraper device including a carrier structure (29) connected at each of its ends to the corresponding tie-rod (20), and scraper members (26) supported by the said carrier structure (29), the said scraper members (26) each comprising an arm (28) fixed at its upper end to the carrier structure (29), and a scraper portion (27) fitted at the lower end of the said arm (28), which extends between two neighbouring crowns (25) up to the level of the envelope (23), the said scraper device including furthermore a mechanism (36) for stiffening the said carrier structure (29), which includes at least one stiffener member (37) connected at its front end to the soil-working machine (4) and at its rear end to the carrier structure (29), ***characterised by the fact*** that the said stiffener member is connected to the soil-working machine (4) by means of a pin (42) with a second axis (43) coinciding at least substantially with the first axis (44) about which the roller (5) and the scraper device can pivot with respect to the soil-working machine (4), and that the said stiffener member (37) can freely pivot about the said second axis (43).

2. A combined agricultural machine for working the soil, as in Claim 1, ***characterised by the fact*** that a limiter member (45, 46, 47) limits the pivoting of the stiffener member (37) in the upwards direction about the axis (43), and that in normal working the limiter member (45, 46, 47) acts upon the stiffener mechanism (36).

3. A combined agricultural machine for working the soil, as in at least one of the Claims 1 or 2, ***characterised by the fact*** that when at work the stiffener member (37) is connected rigidly to the carrier structure (29) at its rear end and includes at its front end a bearing (370) which enables it to pivot about the second axis (43) which substantially coincides with the first axis (44) about which the roller (5) and the scraper device are able to pivot.

4. A combined agricultural machine for working the soil, as in Claim 3, ***characterised by the fact*** that the stiffener member (37) extends substantially in the direction of advance (19) of the machine (1) when at work.

5. A combined agricultural machine for working the soil, as in Claim 2 and at least one of the Claims 3 or 4, **c*haracterised by the fact*** that the limiter member (45, 46, 47) extends between the bearing (370) situated at the front end of the stiffener member (37) and the rear end of this member (37) where the latter is connected to the carrier structure (29).

6. A combined agricultural machine for working the soil, as in Claim 5, ***characterised by the fact*** that the limiter member (45, 46, 47) is formed by two plates (45) extending upwardly between which extends the stiffener member (37), and equipped with a certain number of holes (46) and by a pin (47) which is mounted into two corresponding holes (46) in the said plates (45) and against which in normal working the stiffener member (37) butts.

7. A combined agricultural machine for working the soil, as in Claim 6, ***characterised by the fact*** that the pin (47) collaborates with the upper edge (48) of the stiffener member (37).

8. A combined agricultural machine for working the soil, as in at least one of the Claims 1 to 7, ***characterised by the fact*** that the device for fixing the stiffener member (37) to the carrier structure (29) is equipped with means for taking up manufacturing tolerances.

9. A combined agricultural machine for working the soil, as in Claim 8, ***characterised by the fact*** that the device for fixing the stiffener member (37) to the carrier structure (29) includes two legs (38) integral with the carrier structure (29) and equipped with holes (50) for fixing members (39) to pass through, and between these legs (38) extends the rear end of the stiffener member (37), which likewise has holes (51) for the fixing members (39) to pass through, and the means for taking up manufacturing tolerances is formed by the structure of the holes (51) arranged in the stiffener member (37), which have a diameter substantially larger than the diameter of the fixing members (39).

## Patentansprüche

1. Kombinierte Landmaschine (1) zur Bearbeitung des Bodens mit einer Bodenbearbeitungsmaschine (4) bestehend aus einem Balken (13) in welchem Werkzeuge (12) drehbar geführt sind und auf welchem ein Gestell (6) zur Kupplung der kombinierten Landmaschine (1) zur Bearbeitung des Bodens an die Kupplungsvorrichtung (2) eines landwirtschaftlichen Traktors befestigt ist, und einer Walze (5), die in bezug auf die Bodenbearbeitungsmachine (4) um eine erste, quer zur Arbeitsrichtung (19) gerichtete Achse (44) schwenkbar und mit der Bodenbearbeitungsmaschine (4) mittels zweier Zugarmen (20) verbunden ist, zwischen welchen sich die Walze (5) erstreckt und die jeweils mit einem Lager versehen sind, in welchem die Walze (5) derart drehbar geführt ist, daß sie um ihre Längsachse (21) drehen kann, wobei die Zugarme (20), die sich im wesentlichen parallel zur Arbeitsrichtung (19) erstrecken, jeweils mit einem entsprechenden Ende des Balkens (13) mittels eines Lagerzapfens (17) verbunden ist, welche Lagerzapfen (17) die erste Achse (44) definieren, wobei die Walze (5) einen im wesentlichen zylindrischen Mantel (23) und in bezug auf den Mantel (23) hervorspringende Kränze (25) aufweist, die entlang der Walze (5) in Abständen verteilt sind, und wobei die Walze (5) mit einer Reinigungsvorrichtung versehen ist, die eine an jedem ihrer Enden mit dem entsprechenden Lagerzapfen (20) verbundene Tragkonstruktion (29), und von dieser gehaltene Abstreifelemente (26) aufweist, welche jeweils einen an seinem oberen Ende an der Tragkonstruktion (29) befestigten Arm (28) und einen Abstreifer (27) umfassen, der am unteren Ende des Armes (28) angeordnet ist, und der sich zwischen zwei benachbarten Kränzen (25) bis auf die Höhe des Mantels (23) erstreckt, und wobei ferner die Reinigungsvorrichtung außerdem einen zumindest ein Versteifungsorgan (37) aufweisenden Versteifungsmechanismus (36) der Tragkonstruktion (29) umfaßt, welches Versteifungsorgan (27) an seinem vorderen Ende mit der Bodenbearbeitungsmaschine (4) und an seinem hinteren Ende mit der Tragkonstruktion (29) verbunden ist, ***dadurch gekennzeichnet***, daß das Versteifungsorgan mit der Bodenbearbeitungsmaschine (4) mittels eines Zapfens (42) mit einer zumindest im wesentlichen mit der ersten Achse (44) zusammenfallenden zweiten Achse (43) verbunden ist, um welche die Walze (5) und die Reinigungsvorrichtung in bezug auf die Bodenbearbeitungsmaschine (4) schwenkbar sind, und daß das Versteilungsorgan (37) frei um die zweite Achse (43) schwenken kann.

2. Kombinierte Landmaschine zur Bearbeitung des Bodens nach Anspruch 1, ***dadurch gekennzeichnet***, daß ein Begrenzungselement (45, 46, 47) die Schwenkung des Versteifungsorgans (37) um die Achse (43) nach oben begrenzt und daß das Begrenzungselement (45, 46, 47) während des normalen Betriebs auf den Versteifungsmechanismus (36) wirkt.

3. Kombinierte Landmaschine zur Bearbeitung des Bodens nach einem der Ansprüche 1 oder 2, ***dadurch gekennzeichnet**,* daß das Versteifungsorgan (37) während des Betriebs and seinem hinteren Ende starr mit der Tragkonstruktion (29) verbunden ist und an seinem vorderen Ende ein Lager (370) aufweist, das seine Schwenkung um die zweite Achse (43) ermöglicht, die im wesentlichen mit der ersten Achse (44) zusammenfällt, um welche die Walze (5) und die Reinigungsvorrichtung schwenkbar sind.

4. Kombinierte Landmaschine zur Bearbeitung des Bodens nach Anspruch 3, ***dadurch gekennzeichnet***, daß sich das Versteifungsorgan (37) in der Fortbewegungsrichtung (19) der Maschine (1) im Betrieb erstreckt.

5. Kombinierte Landmaschine zur Bearbeitung des Bodens nach Anspruch 2 und einem der Ansprüche 3 oder 4, ***dadurch gekennzeichnet***, daß sich das Begrenzungselement (45, 46, 47) zwischen dem am vorderen Ende des Versteifungsorgans (37) befindlichen Lager (370) und dem hinteren Ende dieses Organs (37) erstreckt, wo letzteres mit der Tragkonstruktion (29) verbunden ist.

6. Kombinierte Landmaschine zur Bearbeitung des Bodens nach Anspruch 5, ***dadurch gekennzeichnet***, daß das Begrenzungselement (45, 46, 47) von zwei nach oben gerichteten und mit einer gewissen Anzahl von Löchern (46) versehenen Platten (45), zwischen welchen sich das Versteifungsorgan (37) befindet, und einem in zwei entsprechende Löcher (46) der Platten (45) eingesteckten Stift (47) gebildet ist, gegen welchen das Versteifungsorgan (37) im Normalbetrieb anliegt.

7. Kombinierte Landmaschine zur Bearbeitung des Bodens nach Anspruch 6, ***dadurch gekennzeichnet**,* daß der Stift (47) mit dem oberen Rand (48) des Versteifungsorgans (37) zusammenwirkt.

8. Kombinierte Landmaschine zur Bearbeitung des Bodens nach einem der Ansprüche 1 bis 7, ***dadurch gekennzeichnet***, daß die Vorrichtun die Vorricht Fixieren des Versteifungsorgans (37) an der Tragkonstruktion (29) mit einem Ausgleich von Fertigungstoleranzen ausgestattet ist.

9. Kombinierte Landmaschine zur Bearbeitung des Bodens nach Anspruch 8, ***dadurch gekennzeichnet***, daß die Vorrichtung zum Fixieren des Versteifungsorgans (37) an der Tragkonstruktion (29) zwei mit der Tragkonstruktion (29) starr verbundene Lappen (38) aufweist, die mit Löchern (50) zum Durchtritt von Befestigungselementen (39) versehen sind, wobei das hintere Ende des Versteifungsorgans (37), das ebenfalls Löcher (51) für den Durchtritt von Befestigungselementen (39) aufweist, zwischen die Lappen (38) ragt, und daß der Ausgleich von Fertigungstoleranzen von der Gestalt der in das Versteifungsorgan (37) eingearbeiteten Löcher (51) übernommen wird, deren Durchmesser wesentlich größer ist als der Durchmesser der Befestigungselemente (39).
